**Europäisches Patentamt**

**European Patent Office**

**Office européen des brevets**

(11) Veröffentlichungsnummer: **0 083 703**
**B1**

(12) # EUROPÄISCHE PATENTSCHRIFT

(45) Veröffentlichungstag der Patentschrift:
29.01.86

(51) Int. Cl.⁴: **G 01 N 21/64**

(21) Anmeldenummer: **82110337.1**

(22) Anmeldetag: **10.11.82**

(54) **Vorrichtung zur Bestimmung der Sauerstoffkonzentration in Gasen, Flüssigkeiten und Geweben.**

(30) Priorität: **10.12.81 DE 3148830**

(43) Veröffentlichungstag der Anmeldung:
**20.07.83 Patentblatt 83/29**

(45) Bekanntmachung des Hinweises auf die Patenterteilung:
**29.01.86 Patentblatt 86/5**

(84) Benannte Vertragsstaaten:
**DE FR GB IT NL**

(56) Entgegenhaltungen:
**DD - A - 106 086**
**DE - A - 2 117 290**
**DE - B - 2 508 637**
**DE - B - 2 823 318**

**ZEITSCHRIFT FÜR NATURFORSCHUNG, Band 30c, 1975, D.W. LÜBBERS et al. "Die PCO2-/PO2-Optode: Eine neue PCO2- bzw. PO2-Messsonde zur Messung des PCO2 oder PO2 von Gasen und Flüssigkeiten", Seiten 532-533**
**REVIEW OF SCIENTIFIC INSTRUMENTS, Band 51, Nr. 5, Mai 1980, Lancaster, J.I. PETERSON et al. "New technique of surface flow visualization based on oxygen quenching of fluorescence", Seiten 670-671**

(73) Patentinhaber: **Barnikol, Wolfgang, Prof. Dr.Dr., Lanzelhohl 66, D-6500 Mainz-Bretzenheim (DE)**
Patentinhaber: **Burkhard, Oswald, Dr., Schillerstrasse 9, D-6761 Kriegsfeld (DE)**

(72) Erfinder: **Barnikol, Wolfgang, Prof. Dr.Dr., Lanzelhohl 66, D-6500 Mainz-Bretzenheim (DE)**
Erfinder: **Burkhard, Oswald, Dr., Schillerstrasse 9, D-6761 Kriegsfeld (DE)**

(74) Vertreter: **Beil, Walter, Dr. et al, BEIL, WOLFF & BEIL Rechtsanwälte Adelonstrasse 58, D-6230 Frankfurt am Main 80 (DE)**

## Beschreibung

Die Erfindung geht aus von einer Vorrichtung gemäss dem Oberbegriff des Anspruchs 1.

Für zahlreiche Anwendungsgebiete ist es erforderlich, dass die Bestimmung von Sauerstoffkonzentrationen in Gasen, Flüssigkeiten und dergleichen mit einer Einstellzeit von weniger als 10 ms und ohne Totzeit erfolgt und dass bei der Messung kein Sauerstoff verbraucht wird. Beispielsweise ist es erforderlich, in der Intensivpflege von Risikopatienten ebenso wie im Rahmen klinischer Lungenfunktionsprüfungen und bei atmunsphysiologischen Studien die Sauerstoffkonzentration in der Ausatmungsluft kontinuierlich zu überwachen.

Zur Zeit kommen folgende Messprinzipien für die Bestimmung der Sauerstoffkonzentration zur Anwendung: Polarographie, Raman-streuung, Massenspektrometrie, elektrochemische Zellen, Anlagerungsreaktionen (z.B. Extinktionsänderung bei der Reaktion von Hämoglobin mit Sauerstoff), homogene Redox-Reaktionen mit Farbumschlag, Messung der paramagnetischen Eigenschaften der Probe, Fluoreszenzlöschung in homogenen Lösungen. Bei all diesen Verfahren ist jedoch die Einstellzeit deutlich grösser als 10 ms. Ausgenommen davon ist ein polarographisches Verfahren, jedoch ist dort das Gerät sehr anfällig und daher nicht für den Routinebetrieb geeignet. Weiterhin haben die meisten Verfahren eine endliche Totzeit und/oder es wird bei der Messung $O_2$ verbraucht.

Es gibt auch Vorrichtungen zur Messung der Sauerstoffkonzentration unter Verwendung des Prinzips der Lumineszenzlöschung von durch Licht entsprechender Wellenlänge erzeugten fluoreszierenden Substanzen. Vorgeschlagen werden dafür Messkammern mit Lösungen des Lumineszenzfarbstoffes (DE-B-2 346 792 und DE-C-2 508 637) und Messschichten (DE-B-2 823 318), die den Farbstoff auf einem Absorbens enthalten. Im ersten Falle liegen die Einstellzeiten aber in Grössenordnungen von mehreren Sekunden (bis zu 30 Sekunden). Im zweiten Fall wurde gefunden, dass mit einer nach Peterson und Fitzgerald [Rev. Sci. Instr. 51. 670-671 (1980)] hergestellten $O_2$-sensitiven Lumineszenzschicht die Einstellzeiten immer noch 40 - 60 ms betrugen. Auch ist bei der letztgenannten Vorrichtung nicht offenbart, wie die mechanische Haftung des Kieselgels auf der Unterlage, die für die Praxis wesentlich ist, erreicht werden soll.

Derzeit gibt es deshalb kein Verfahren, das die eingangs aufgeführten Bedingungen (keine Totzeit, 90%-Einstellzeit kleiner als 10 ms, kein Sauerstoffverbrauch, kontinuierliche Messung) vollständig erfüllen kann, obwohl dafür ein beachtliches Bedürfnis besteht.

Der Erfindung liegt deshalb die Aufgabe zugrunde, die Sauerstoffkonzentration in Gasen, Flüssigkeiten und Geweben mit einer 90%-Einstellzeit von weniger als 10 ms, ohne Totzeit und ohne Sauerstoff-Eigenverbrauch kontinuierlich zu messen.

Zur Lösung dieser Aufgabe wird die Tatsache ausgenutzt, dass Sauerstoff, dank seines magnetischen Moments, die Lichtemission von Lumineszenzfarbstoffen verringern kann. Je höher die Sauerstoffkonzentration ist, desto geringer ist die Lumineszenzintensität. Allerdings ist der quantitative Zusammenhang zwischen prozentualer Änderung der Emissionsintensität und der Sauerstoffkonzentration nicht linear. Die Lumineszenzlöschung wurde bereits eingesetzt, um die Sauerstoffkonzentrationen in Probemedien zu bestimmen. Allerdings wurde dann mit homogenen Systemen (Lösungen des Lumineszenzfarbstoffes) gearbeitet, was zwangsläufig wegen der langen Diffusionswege lange Ansprechzeiten bedingt. Bei einem Vorschlag mit einem inhomogenen System, bei dem der flureszierende Stoff auf einem Absorbens aufgetragen ist, ist die Einstellzeit wegen der Oberflächenstruktur zu gross.

Die erfindungsgemässe Vorrichtung verwendet als lumineszierendes Messelement, dessen Lichtemission gemessen wird, eine lumineszierende Oberfläche, die aus der Oberfläche einlagig dichtgepackter Teilchen mit einem Durchmesser von weniger als 1 mm, vorzugsweise weniger als 0,1 mm auf einem lichtdurchlässigen, mit einer Haft- oder Klebeschicht versehenen Träger besteht, wobei die Teilchen wenigstens in ihrem Oberflächenbereich die lumineszierende Substanz enthalten.

Die Körner können entweder der Lumineszenzfarbstoff selbst sein oder aus einen inerten Trägermaterial, wie Kieselgel oder einem wasserabstossenden Material, auf dem der Farbstoff adsorbiert ist, bestehen. Da gefunden wurde, dass durch Wasser schon in kleinen Mengen die bei Verwendung von Kieselgel als Träger erhaltenen Messwerte verfälscht wurden, muss für Messungen wasser- oder wasserdampfhaltiger Medien das inerte Trägermaterial wasserabstossend sein. Beispielsweise eignet sich dafür poröses Polystyrol mit dreidimensionaler Vernetzung durch Ethylvinyl- und Divinylbenzol, das auch Spuren polarer Monomerer aufweist («Porapak Q» der Firma Dow Chemical).

Bei der Auswahl der Lumineszenzfarbstoffe ist zu berücksichtigen, dass Wechselwirkungen zwischen den zu untersuchenden Medien und dem Farbstoff das Messergebnis beeinflussen können. Bei polaren Medien sollte der Farbstoff selbst unpolar und bei unpolaren Medien vorzugsweise polar sein. Bei der Messung der stets eine gewisse Feuchtigkeit aufweisenden Atemluft ist deshalb ein unpolarer Farbstoff zu verwenden.

Bezeichnet man mit $I_o$ die Lumineszenzintensität bei Abwesenheit von $O_2$ und mit $I$ die Lumineszenzintensität bei einem bestimmten $O_2$-Partialdruck ($P_{O_2}$) bzw. $O_2$-Konzentration ($c_{O_2}$) ($c_{O_2} = \alpha\, P_{O_2}$, $\alpha =$ Löslichkeitskoeffizient von $O_2$), so gilt für Lösungen (d.h. der Lumineszenzfarbstoff liegt im gelösten Zustand vor):

$$\frac{I}{I_o} = \frac{1}{1 + x} \qquad (1)$$

mit $x = k_Q\, \tau_o\, S\, P_{O_2}$. $k_Q$ ist die Zeitkonstante, die die $O_2$-Löschung der Lumineszenz beschreibt. $\tau_o$ ist die Lumineszenzabklingzeit der $O_2$-sensitiven Substanz und $S$ die Löslichkeit von $O_2$

Es wurde gefunden, dass Gleichung (1) auch für die Lumineszenzlöschung an Oberflächen gilt. Für $x$ muss man jedoch den folgenden Ausdruck einsetzen:

$$x = \beta \, \tau_o \, P_{O_2} \qquad (2)$$

$\beta$ ist eine für das jeweilige System konstante Grösse. $\tau_o$ ist die Abklingzeit der $O_2$-sensitiven Substanz in dem vorliegenden Zustand (z.B. kann ein Lumineszenzfarbstoff, der in einer Schicht aus Silica-Gel eingearbeitet ist, eine andere Lumineszenzabklingzeit haben, als die gleiche Substanz in Lösung). $P_{O_2}$ ist der $O_2$-Partialdruck in der Gasphase bzw. Flüssigkeitsphase vor der $O_2$-sensitiven Schicht. Wie in der Literatur ausführlich dargelegt wurde, erreicht man nur dann eine für quantitative Messungen zufriedenstellende Empfindlichkeit, wenn:

$$0,1 < x = \beta \, \tau_o \, P_{O_2} < 0,9 \qquad (3)$$

Dies bedeutet, dass für jeden $P_{O_2}$-Bereich (der $P_{O_2}$-Bereich umfasst etwa eine Dekade) eine geeignete Substanz ausgewählt werden muss. Die Grösse $\beta$ hängt insbesondere von der Viskosität und Struktur des Mediums der $O_2$-sensitiven Schicht ab. Bei vorgegebenem Medium und $P_{O_2}$-Bereich muss die lumineszierende Substanz hinsichtlich $\tau_o$ so ausgesucht werden, dass die Bedingung $0,1 < x < 0,9$ möglichst gut erfüllt ist. Umgekehrt kann man durch Einsatz geeigneter Lumineszenzfarbstoffe auch den günstigen Messbereich derart verschieben, dass sich extrem grosse oder extrem geringe $P_{O_2}$-Werte mit ausreichender Genauigkeit nachweisen lassen.

Eine Vorrichtung zur Messung der Lumineszenzlöschung besteht im Grundsatz aus den folgenden Elementen:

1. Einer Vorrichtung zur Erzeugung von Licht einer bestimmten Wellenlänge oder eines bestimmten Wellenlängsbereichs
2. Einer auf einem durchsichtigen Träger aufgebrachten lumineszierenden dünnen Schicht
3. Einem Filter zur Absorption des Ausgangslichts und
4. Einer Vorrichtung zum Messen der Intensität des emittierten Lichts.

Entscheidend und erfindungswesentlich ist, dass die dünne lumineszierende Schicht als sog. «einkörnige» Schicht vorliegt; das bedeutet, dass der Farbstoff oder das inerte Trägermaterial mit dem adsorbierten Farbstoff auf dem Träger, der ein Film oder eine Glasplatte sein kann, derart verteilt ist, dass praktisch jedes einzelne Teilchen den Träger berührt. Die Schichtdicke entspricht folglich etwa der Teilchengrösse. Der Durchmesser der Teilchen sollte kleiner als 1 mm, vorzugsweise kleiner als 0,1 mm sein. Um ein günstiges Signal-Rausch-Verhältnis zu erhalten, sollten die einzelnen Teilchen auf dem Träger ferner dicht gepackt sein. Die Haftung der Teilchen auf dem Träger wird dadurch erreicht, dass der Träger eine Haft- oder Klebeschicht aufweist.

Wenn man nicht den Farbstoff selbst auf den Träger aufträgt, benutzt man ein inertes Trägermaterial, wie Silica-Gel oder ein wasserabstossendes dreidimensional vernetztes Polystyrol entsprechender Teilchengrösse, an dem der Farbstoff absorbiert ist. Die spezielle Gestaltung der $O_2$-sensitiven Schicht gewährleistet, dass das Messgut rasch auf den Lumineszenzfarbstoff einwirken kann. Zusätzlich kann die Sauerstoff-sensitive Schicht mit einer extrem dünnen sauerstoffdurchlässigen Membran (M), die dünner als 5 μm und vorzugsweise dünner als 1 μm ist, überzogen werden. Als Material für diese Membran eignen sich Halogenkohlenwasserstoff-Polymere. Die Herstellung einer solchen Membran ist in M. Kessler et al, Oxygen Supply, Urban & Schwarzenberg, München-Berlin-Wien, 1973, S. 86-91 beschrieben. Bei dieser Ausführungsform ist es möglich, die Sauerstoff-sensitive Schicht und den Probenraum voneinander zu trennen. Da die Lumineszenzfarbstoffe giftig oder cancerogen sein können, ist für die Anwendung in der Humanmedizin eine solche Trennung von Probenraum und Sauerstoffsensitiver Schicht wichtig.

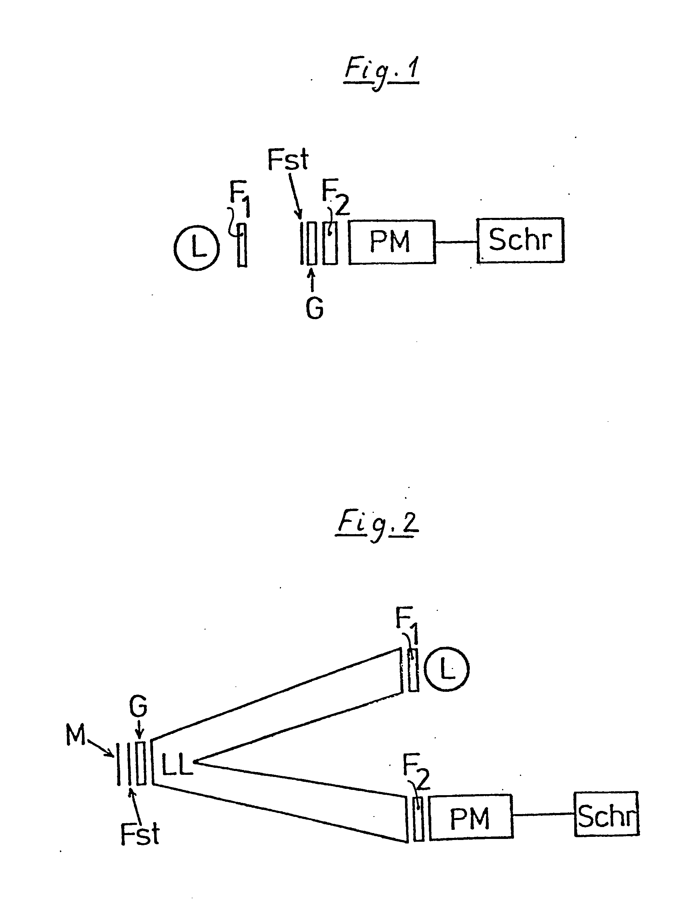

Die Messvorrichtung kann in zwei unterschiedlichen Ausführungsformen benutzt werden: Man ordnet entweder die Messkammer zwischen Lichtquelle und lumineszierender Schicht an (Ausführung A) oder bringt Lichtquelle und Messvorrichtung auf der gleichen Seite der lumineszierenden Schicht an und lässt das Messgut von der anderen Seite auf die lumineszierende Schicht einwirken (Ausführung B). Beide Ausführungsformen der Messvorrichtung werden anhand der Zeichnungen erläutert, wobei die Figur 1 die Anordnung nach Ausführung A und die Figur 2 die Anordnung nach Ausführung B zeigt.

In der Ausführung A befindet sich die lumineszierende Schicht (Fst) als dünne «einkörnige» Schicht auf einem mit einer Haft- oder Klebeschicht versehenen Träger (G). Mittels einer Lichtquelle (L) und eines Interferenzfilters ($F_1$) wird Licht einer bestimmten Wellenlänge erzeugt. Natürlich können auch andere Vorrichtungen zur Erzeugung des Anregungslichtes, wie beispielsweise Laser oder ein Monochromator anstelle eines Filters verwendet werden. Hinter dem Träger befindet sich der Kantenfilter ($F_2$), welcher das Anregungslicht weitgehend absorbiert, jedoch das emittierte Licht nur geringfügig abschwächt. Das emittierte Licht gelangt nun zu einem Photomultiplier (PM) oder einem anderen Lichtdetektor (Photowiderstand, Silicium-Photoelement oder dergleichen). Zwischen dem Filter $F_2$ und dem Fotomultiplier kann wahlweise ein Lichtleiter angebracht werden. Die Lichtintensität wird dann mit Hilfe eines Schreibers (Schr), eines Oszillographen oder eines ähnlichen Anzeigegeräts registriert. Die Gas- bzw. Flüssigkeitsprobe fliesst durch den Raum zwischen dem Filter $F_1$ und der Lumineszenzschicht Fst. Um eine Querempfindlichkeit gegenüber dem Feuchtigkeitsgehalt der Proben zu verhindern, muss die Messkammer auf Temperaturen von 40 bis 60°C aufgeheizt werden.

Bei der Ausführung B wird ein zweiarmiger Lichtleiter (LL) eingesetzt. Um gute Messsignale zu erhalten, sollten die Fasern der Arme bei LL statistisch gemischt sein. An einem Arm des Lichtleiters befindet sich das Interferenzfilter ($F_1$) und die Lichtquelle (L). Hier wird wieder das Anregungslicht erzeugt. Auf dem Träger (G), der vor dem gemeinsamen Teil des Lichtleiters angebracht ist, befindet sich wieder der Lumineszenzfarbstoff (Fst) in der schon vorstehend beschriebenen Form. Das emittierte Licht wird über den zweiten Arm des Lichtleiters zum Kantenfilter ($F_2$) geleitet und dann, in gleicher Weise wie bereits beschrieben wurde, quantitativ gemessen.

Der gemeinsame Teil des Lichtleiters mit der Lumineszenzschicht kann an den Ort gebracht werden, wo die Sauerstoffkonzentration zu messen ist, also beispielsweise auch in den Körper des Patienten.

Mit der erfindungsgemässen Vorrichtung können 90%-Einstellzeiten erreicht werden, die deutlich kleiner als 10 ms sind. Das Messsystem übertrifft also hinsichtlich der Einstellzeit alle bekannten Sauerstoff-Detektoren. Weiterhin wird die Messung der Sauerstoffkonzentration lokal durchgeführt, so dass das Messsystem ohne Totzeit arbeitet. Es ist ferner offensichtlich, dass das Messsystem keinen Sauerstoff verbraucht. Besonders günstig ist auch die Tatsache, dass man durch Wahl geeigneter lumineszierender Substanzen den Messbereich in weiten Grenzen variieren kann. Selbstverständlich arbeitet das Messsystem kontinuierlich.

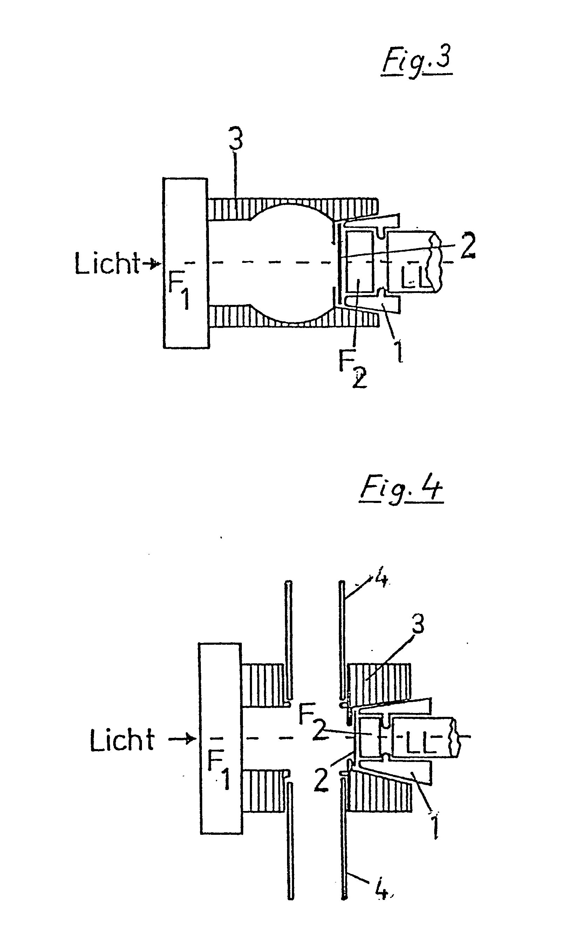

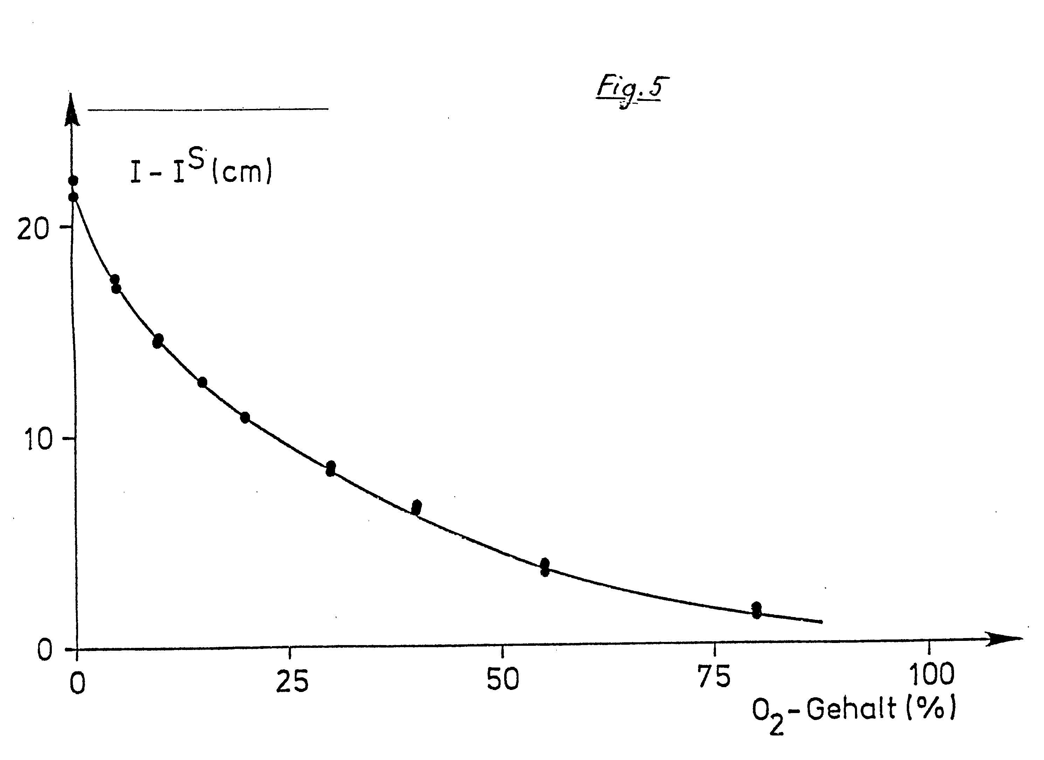

Als konkretes Ausführungsbeispiel für das erfindungsgemässe Messsystem wird im folgenden der nach der Ausführung A gebaute Sauerstoff-Detektor für Gase beschrieben. Die Messkammer ist in den Figuren 3 und 4 dargestellt. Dabei ist die Figur 3 ein Vertikalschnitt durch die Messkammer und die Figur 4 ein Horizontalschnitt durch die Messkammer entlang der gestrichelten Linie der Figur 3. Die Bezugsziffern haben die folgende Bedeutung:

1: Halter für Filter F2 und Lichtleiter (LL)
2: Tesafilmstreifen mit auf Silica-Gel aufgezogenem Fluorescent Yellow
3: Wand der Messkammer (aus Kunststoff oder Metall)
4: Tubus zum Füllen der Messkammer.

Bei atmungsphysiologischen Experimenten interessiert besonders der $P_{O_2}$-Bereich von 0 bis 0,266 bar (200 mmHg). Für diesen $P_{O_2}$-Bereich eignet sich der Farbstoff Pylakrome Fluorescent Yellow, No. 1 205 781 (wegen $\tau_0$ wie vorstehend beschrieben) der Firma Pylam Products & Co, 95-10 218th Street, Queens Village New York 11429, USA, besonders gut. Entsprechend den Angaben in der Literatur [Peterson und Fitzgerald, Rev. Sci. Instr. 51, 670-671 (1980)] wurde eine Aufschwemmung von 1,7 g Silica-Gel (Merck, Kieselgel 60, Korngrösse 0,040 bis 0,63 mm) in einer Lösung von 0,02 g Fluorescent Yellow und 0,06 g Polyvinylpyrrolidon in absolutem Alkohol nach heftigem Schütteln über eine Glasplatte dünn verteilt und die Glasplatte anschliessend im Trockenschrank bei 70°C gelagert. Nachdem das Lösungsmittel verdunstet war, befand sich auf der Glasplatte eine Schicht aus Silica-Gel, wobei der Farbstoff an Silica-Gel-Körnchen adsorbiert war. Diese Schicht wurde dann abgekratzt und das pulverförmige Material auf die klebrige Seite eines Tesa-Film-Streifens (Beiersdorf AG, Hamburg) gestreut. Um eine besonders gute Haftung zu erreichen, wurde das Silica-Gel (mit adsorbiertem Farbstoff) mittels einer Glasplatte fest angedrückt. Danach wurden die Silica-Gel-Teilchen, die nur lose auf dem Tesa-Film-Streifen hafteten, durch Blasen mit einem kräftigen Luftstrom entfernt. Man erhält auf diese Weise einen Film, auf dessen Oberfläche einzelne Silica-Gel-Körnchen einkörnig, jedoch dicht gepackt angeordnet sind. Der Farbstoff befindet sich, wie bereits erwähnt, auf der Oberfläche der Silica-Gel-Körnchen und kann von dem zu messenden Gas gut und sehr schnell erreicht werden. Der Film wurde dann so zugeschnitten, dass er in die Messkammer des $O_2$-Detektors passte. Die auf diese Weise hergestellte Membran wurde als $O_2$-sensitive Schicht benutzt.

Als Lichtquelle dient eine 150-W-Xe-Hochdrucklampe (XBO 150 W, Osram; Netzgerät: M 303 der Firma PRA; Lampengehäuse: ALH 210 der Firma PRA; Vertrieb in Deutschland: Firma AMKO/Tornesch). Als Interferenzfilter ($F_1$) wird der Filter Hg 366 nm der Firma Eppendorf/Hamburg eingesetzt. Mit Hilfe der Linse des Lampengehäuses fokussiert man das Licht der Xe-Hochdrucklampe möglichst gut auf die $O_2$-sensitive Schicht. Der Filter ($F_2$) ist ein Kantenfilter der Firma Schott/Mainz (Typ GG 495). Hinter dem Kantenfilter ist ein Lichtleiter angebracht, der das emittierte Licht einem Photomultiplier zuführt (Typ IP 28 der Firma RCA; deutscher Lieferant: Alfred Neye Enatechnik/Quickborn). Der Anodenstrom wird mit einem Kompensationsschreiber der Firma Siemens (Kompensograph III) registriert. Um die 90%-Einstellzeit zu bestimmen, wurde ein Speicheroszillograph der Firma Hameg (Typ HM 812 - 2) benutzt.

Mittels eines Widerstandes (nicht gezeigt) erfolgt die Heizung der Messkammer.

Durch diesen Sauerstoff-Detektor wurden Gase mit unterschiedlichem Sauerstoffgehalt geleitet. Als Restgas wurden jeweils Stickstoff oder Kohlendioxid verwendet. Die Gasgemische wurden mit Hilfe einer Gasmischpumpe (Typ 1 M 300/a-F) der Firma Wösthoff in Bochum hergestellt. Man erhielt die in Figur 5 dargestellte Eichkurve. Dabei ist I die Grösse des am Schreiber abgelesenen Signals bei einem bestimmten Sauerstoffgehalt das der Lumineszenz-intensität bei dem jeweiligen Sauerstoffgehalt proportional ist, und $I^s$ das Signal bei einem Sauerstoffgehalt von 100%.

Um die Reproduzierbarkeit der Messergebnisse und die Genauigkeit der Messvorrichtung zu überprüfen, wurden mit der Wösthoff-Pumpe unterschiedliche Gasgemische erzeugt, die zugehörige Lumineszenzintensität gemessen und mit Hilfe der Eichkurve der $P_{O_2}$ bzw. der $O_2$-Gehalt berechnet. Tabelle 1 zeigt das Resultat:

Tabelle 1

| $I - I^s$ (cm) gemessen | $O_2$-Gehalt (%) mittels der Eichkurve berechnet | $O_2$-Gehalt (%) gemäss der Anzeige der Wösthoff-Pumpe | Fehler (%) |
|---|---|---|---|
| 10,0 | 23,0 | 23,0 | 0 |
| 12,7 | 14,5 | 14,0 | 3,5 |
| 15,1 | 8,5 | 8,0 | 6,25 |
| 11,1 | 19,0 | 19,0 | 0 |

mittlerer Fehler: 2%

Untersuchungen an trockenen und feuchten Gasgemischen ergeben, dass die Eichkurve im Rahmen der Messgenauigkeit für alle Gemische identisch ist und die Messergebnisse durch $CO_2$ und $N_2O$ nicht beeinflusst werden.

Obwohl nur ein sehr primitives Nachweissystem eingesetzt wurde, gelang es, den Sauerstoffgehalt der Gasproben mit einem relativen Fehler von 0 - 5% zu bestimmen. Dabei wurde der Schreiberausschlag und somit der Wert des Signals I mit dem Lineal mit einer Genauigkeit von ± 1 mm gemessen und Zwischenwerte wurden auf- bzw. abgerundet. Dies kann bereits einen relativen Fehler von 1 - 3% verursachen. Mit einem verfeinerten Messsystem kann man die Reproduzierbarkeit der Methode noch deutlich verbessern und einen relativen Fehler von nur etwa 1% erreichen.

Um die Einstellzeit zu messen, wurde die Messkammer von einem Füllstutzen aus mit Stickstoff gefüllt und der andere Füllstutzen mit einer Karte verschlossen. Gegen diese Karte wurde ein kräftiger Sauerstoffstrom geblasen. Die Karte wurde dann möglichst schnell weggezogen und die zeitliche Veränderung des Lumineszenzsignals im Oszillographen verfolgt. Bei diesem Versuch wurde eine 90%-Einstellzeit von 1 - 3 ms beobachtet.

Anstelle der aus Silicagel und Fluorescent Yellow bestehenden Messschicht können auch andere Träger und Farbstoffe, wie beispielsweise als Träger das genannte Polystyrol und als Farbstoff Tetraphenylporphyrin oder 1-Dimethyl-2,6-cyano-4-methylbenzol, verwendet werden. In Abhängigkeit von dem verwendeten Farbstoff wählt man dann geeignete Interferenzfilter und Kantenfilter für die Messvorrichtung aus.

Die Farbstoffkonzentration, von der die Genauigkeit der Messwerte stoffspezifisch abhängt, ist von Fall zu Fall in einer einfachen Versuchsreihe zu ermitteln. Gutes Material für die Messschicht erhält man beispielsweise auch auf folgende Weise:

a) Man stellt eine Aufschwämmung von 0,82g porösem Polystyrol (Porapak Q) in einer Lösung von 1,3 g Fluorescent Yellow in 5 ml absolutem Äthanol her, schüttelt heftig, filtriert die Suspension und trocknet das Suspensat bei 100°C.

b) 0,95 g poröses Polystyrol (Porapak P) werden zu einer Lösung von 24,7 mg 1-Dimethyl-2,6-dicyano-4-methylbenzol in 5 ml Aceton zugegeben. Die Mischung wird kräftig geschüttelt und dann nach der vorstehend beschriebenen Methode weiter behandelt.

c) 0,94 g poröses Polystyrol (Porapak Q) werden zu einer Lösung von 4 mg Tetraphenylporphyrin in 5 ml Dioxan zugegeben. Die Mischung wird kräftig geschüttelt und dann nach der vorstehend beschriebenen Methode weiter behandelt. Die Trocknung erfolgt bei 120°C.

Mit den vorstehend unter a bis c beschriebenen Schichtpräparationen kann man feuchtigkeitsunabhängige Signale erhalten (Kammertemperatur 40 bis 60°C). Ein solches System eignet sich besonders für die Messung von Atemgasen.

**Patentansprüche**

1. Vorrichtung zur Bestimmung der Sauerstoffkonzentration in Gasen, Flüssigkeiten und Geweben durch Messung der Verringerung der Lichtemission einer mit einem Anregungslicht bestimmter Wellenlänge bestrahlten lumineszierenden Oberfläche (Fst) mit einer Lichtquelle (L) zur Erzeugung des Anregungslichts und einer Einrichtung (F$_2$, PM) zum Messen der Intensität des emittierten Lichts, dadurch gekennzeichnet, dass diese Oberfläche (Fst) die Oberfläche einlagig dichtgepackter Teilchen mit einem Durchmesser von kleiner als 1 mm, vorzugsweise kleiner als 0,1 mm auf einem lichtdurchlässigen, mit einer Haft- oder Klebeschicht versehenen Träger (G) ist und dass die Teilchen wenigstens in ihrem Oberflächenbereich die lumineszierende Substanz enthalten.

2. Vorrichtung nach Anspruch 1, dadurch gekennzeichnet, dass die Oberfläche vollständig aus einer lumineszierenden Substanz besteht.

3. Vorrichtung nach Anspruch 1, dadurch gekennzeichnet, dass die lumineszierende Substanz auf inertem Trägermaterial aufgezogen ist.

4. Vorrichtung nach Anspruch 3, dadurch gekennzeichnet, dass das inerte Trägermaterial Kieselgel ist.

5. Vorrichtung nach Anspruch 3, dadurch gekennzeichnet, dass das inerte Trägermaterial wasserabstossend, insbesondere ein wasserabstossendes dreidimensional vernetztes Polystyrol, ist.

6. Vorrichtung nach Anspruch 1 - 5, dadurch gekennzeichnet, dass eine Messkammer vorhanden ist, die auf 40° bis 60°C erwärmbar ist.

7. Vorrichtung nach Anspruch 1 - 6, dadurch gekennzeichnet, dass das Messgut und die Lumineszenzschicht durch eine sehr dünne, sauerstoffdurchlässige Schicht von weniger als 5 μm getrennt ist.

8. Vorrichtung nach Anspruch 7, dadurch gekennzeichnet, dass die Schicht dünner als 1 μm ist.

9. Vorrichtung nach Anspruch 7 und 8, dadurch gekennzeichnet, dass die Schicht eine Membran (M) aus Halogenkohlenwasserstoff-Polymeren ist.

10. Vorrichtung nach Anspruch 1 - 9, dadurch gekennzeichnet, dass das Messgut zwischen der Lichtquelle (L) und der lumineszierenden Schicht (Fst) angeordnet ist.

11. Vorrichtung nach Anspruch 1 - 9, dadurch gekennzeichnet, dass das Anregungslicht durch einen Arm eines Lichtleiters (LL) auf die Lumineszenzschicht geleitet und das emittierte Licht durch einen zweiten Arm eines Lichtleiters (LL) zu der Messvorrichtung (F$_2$, PM) geleitet wird.

12. Vorrichtung nach Anspruch 11, dadurch gekennzeichnet, dass der Lichtleiter (LL) aus einzelnen Fasern besteht und die Lichtleiterfasern der beiden Lichtleiterarme nahe der Lumineszenzschicht (Fst) statistisch gemischt sind.

13. Vorrichtung nach Anspruch 1 - 12, dadurch gekennzeichnet, dass zur Untersuchung polaren Messguts als lumineszierende Substanz ein unpolarer Farbstoff verwendet wird.

## Claims

1. Apparatus for determining oxygen concentration in gases, liquids and tissues by measuring the decrease in light emission of a luminescent surface (Fst) with an excitation light of a certain wave length comprising a light source (L) for producing the excitation light and and a device ($F_2$, PM) for measuring the intensity of the emitted light, characterized in that the surface (Fst) is the surface of a single layer of densely packed particles with a diameter of less than 1 mm, preferably less than 0.1 mm, on a transparent support (G) with a sticking or adhesive layer and that the particles at least in their surface area contain the luminescent substance.

2. Apparatus according to claim 1, characterized in that the surface consists completely of a luminescent substance.

3. Apparatus according to claim 1, characterized in that the luminescent substance is adsorbed on an inert carrier material.

4. Apparatus according to claim 3, characterized in that the inert carrier material is silica gel.

5. Apparatus according to claim 3, characterized in that the inert carrier material is waterphobic, especially a waterphobic three-dimensional cross-linked polystyrene.

6. Apparatus according to claim 1 - 5, characterized in that there is a measuring chamber which can be heated to 40 to 60°C.

7. Apparatus according to claim 1 - 6, characterized in that the sample and the luminescent layer are separated by a very thin oxygen-transmissible layer of less than 5 μm.

8. Apparatus according to claim 7, characterized in that the layer is thinner than 1 μm.

9. Apparatus according to claim 7 and 8, characterized in that the layer is a membrane (M) made from halogenated hydrocarbon polymers.

10. Apparatus according to claim 1 - 9, characterized in that the sample to be measured is inserted between the light source (L) and the luminescent layer (Fst).

11. Apparatus according to claim 1 - 9, characterized in that the excitation light is conducted onto the luminescent layer by one arm of a light conductor (LL) and the emitted light is conducted to the measuring device ($F_2$, PM) by a second arm of a light conductor (LL).

12. Apparatus according to claim 11, characterized in that the light conductor (LL) consists of individual fibers and the light conducting fibers of both arms of the light conductor are mixed statistically near the luminescent layer (Fst).

13. Apparatus according to claim 1 - 12, characterized in that a non-polar dye is used as luminescent substance when polare samples are examined.

## Revendications

1. Dispositif de détermination de la concentration d'oxygène dans les gaz, les liquides et les tissus par mesure de la diminution de l'émission de lumière d'une surface luminescente (Fst) irradiée par une lumière activante de longueur d'onde déterminée avec une source de lumière (L) pour produire la lumière activante et un dispositif ($F_2$, PM) pour la mesure de l'intensité de la lumière émise, caractérisé en ce que cette surface (Fst) est la surface d'une seule couche de particules tassées, ayant un diamètre inférieur à 1 mm, de préférence inférieur à 0,1 mm, sur un support (G) transparent muni d'une couche adhérente et en ce que les particules contiennent au moins dans leur zone superficielle la substance luminescente.

2. Dispositif selon la revendication 1, caractérisé en ce que la surface se compose entièrement d'une substance luminescente.

3. Dispositif selon la revendication 1, caractérisé en ce que la substance luminescente est fixée sur support inerte.

4. Dispositif selon la revendication 3, caractérisé en ce que le support inerte est du gel de silice.

5. Dispositif selon la revendication 3, caractérisé en ce que le support inerte est hydrophobe, en particulier un polystyrène réticulé tridimensionnel hydrophobe.

6. Dispositif selon les revendications 1 - 5, caractérisé en ce qu'on dispose d'une chambre de mesure qu'on peut chauffer de 40° à 60°C.

7. Dispositif selon les revendications 1- 6, caractérisé en ce que la matière de mesure et la couche luminescente sont séparées par une couche très mince, perméable à l'oxygène, de moins de 5 μm.

8. Dispositif selon la revendication 7, caractérisé en ce que la couche a une épaisseur inférieure à μm.

9. Dispositif selon les revendications 7 et 8, caractérisé en ce que la couche est une membrane (M) de polymères d'hydrocarbures halogénés.

10. Dispositif selon les revendications 1 - 9, caractérisé en ce que la matière de mesure est disposée entre la source de lumière (L) et la couche luminescente (Fst).

11. Dispositif selon les revendications 1 - 9, caractérisé en ce que la lumière activante est introduite par un bras d'un conducteur de lumière (LL) sur la couche luminescente et en ce que la lumière émise est conduite par un second bras d'un conducteur de lumière (LL) au dispositif de mesure ($F_2$, PM).

12. Dispositif selon la revendication 11, caractérisé en ce que le conducteur de lumière (LL) se compose de fibres distinctes et en ce que les fibres de conducteur de lumière des deux bras du conducteur de lumière sont mélangées statistiquement au voisinage de la couche luminescente (Fst).

13. Dispositif selon les revendications 1 - 12, caractérisé en ce que pour l'analyse d'une matière de mesure polarisée, on utilise comme substance luminescente un colorant non polarisé.

Fig.1

Fig.2

_Fig. 3_

_Fig. 4_

Fig.5

I - I$^S$(cm)

O$_2$-Gehalt (%)

0 083 703